Europäisches Patentamt

European Patent Office

Office européen des brevets

(19)

(11) Publication number: **0 308 254**
**A2**

(12) **EUROPEAN PATENT APPLICATION**

(21) Application number: 88308611.8

(22) Date of filing: 16.09.88

(51) Int. Cl.⁴: **G 11 B 5/012**
G 11 B 5/48, G 11 B 5/55

(30) Priority: 18.09.87 JP 232633/87

(43) Date of publication of application:
**22.03.89 Bulletin 89/12**

(84) Designated Contracting States: **DE GB**

(71) Applicant: **Hitachi Maxell Ltd.**
**No 1-1-88, Ushitora Ibaraki-shi**
**Osaka-fu (JP)**

(72) Inventor: **Fujiwara, Hideo**
**2-24-9, Keyakidai Moriyamachi**
**Kitasoma-gun Ibaraki-ken (JP)**

(74) Representative: **Williams, Trevor John et al**
**J.A. KEMP & CO. 14 South Square Gray's Inn**
**London WC1R 5EU (GB)**

(54) **Magnetic disk memory.**

(57) Disclosed is a magnetic disk memory having a magnetic disk and a magnetic head device adapted to record and/or reproduce information using the magnetic disk as a medium. The magnetic head device is composed of a plurality of magnetic heads rigidly mounted on one slider, these plurality of magnetic heads being arranged in the radial direction of the magnetic disk.

FIG. 1

EP 0 308 254 A2

**Description**

## MAGNETIC DISK MEMORY

### BACKGROUND OF THE INVENTION

This invention relates to a magnetic disk memory, and in particular to the magnetic head mounting structure of a magnetic head device for a magnetic disk memory.

A magnetic disk memory is equipped with a magnetic head device by means of which recording and/or reproduction of information on or from the magnetic disk is effected. Conventionally, a magnetic disk memory having a large-diameter magnetic disk is equipped with a so-called multihead-type magnetic head device in which a plurality of magnetic heads are arranged in a row in the radial direction of the magnetic disk in order to shorten the access time by reducing the magnetic head transfer distance.

In a well-known multihead-type magnetic head device, a magnetic head assembly is so constructed that one magnetic head is attached to one slider. A plurality of magnetic head assemblies thus constructed are mounted at equal pitch on a support member in the longitudinal direction thereof, through respective gimbal springs.

This magnetic head device is arranged in the radial direction of the magnetic disk, with the magnetic gaps of the magnetic heads facing the magnetic disk. The magnetic heads are moved radially over the magnetic disk by driving an actuator connected to said support member.

The recording area for recording and/or reproducing information on a magnetic disk memory equipped with this magnetic head device is shared by a plurality of magnetic heads arranged in the radial direction of the magnetic disk, so that the magnetic head transfer range which is effected by the actuator can be relatively narrow, whereby the access time can be shortened.

It is true that the above-described multihead-type magnetic head device is effective for a magnetic head device having a magnetic disk with a relatively large diameter.

However, the construction of this magnetic head device is such that one magnetic head is attached to one slider, which is mounted on a support member through a gimbal spring, so that a large area is needed for one magnetic head to be mounted on the support member. For the magnetic heads to be arranged on the support member, the space between two adjacent magnetic heads must be equal to or greater than the width of the gimbal spring. Accordingly, it is by no means easy to apply a multihead-type magnetic head device to a magnetic disk having a small diameter such as 5.25 inches. In particular, it is next to impossible to apply a multihead-type magnetic head device to a magnetic disk whose diameter is 2.5 inches or less.

In the field of magnetic disk memory, one of the most important technical problems has become how to make the device smaller and how to increase the access speed. Hence the urgent demand for a multihead-tupe magnetic head device which can be applied to a magnetic disk memory equipped with a magnetic disk having such a small diameter as mentioned above.

### SUMMARY OF THE INVENTION

Accordingly, it is an object of this invention to overcome the problems in the above-described prior art.

The present invention provides a small magnetic disk memory equipped with a magnetic head device on which a plurality of magnetic heads are mounted close to each other.

In accordance with this invention, a plurality of magnetic heads are rigidly mounted on one slider, the magnetic heads being arranged in the radial direction of the magnetic disk.

Since in this invention the plurality of sliders and gimbal springs in the conventional device, provided one for each magnetic head, are omitted, the magnetic heads can be arranged in a row at a pitch corresponding to several to a few hundreds of tracks. Accordingly, this invention makes it possible to apply a multihead-type magnetic head device to a magnetic disk memory equipped with a magnetic disk having a small diameter.

A small-diameter magnetic disk can be driven at high speeds. This high rotational speed of the magnetic disk and the shortness of the transfer distance to be covered by the magnetic heads together help to shorten the access time in recording/reproduction.

### BRIEF DESCRIPTION OF THE DRAWINGS

Figure 1 is a perspective view of a magnetic disk memory according to an embodiment of this invention;

Figure 2 is a perspective view of the magnetic head assembly in the magnetic disk memory shown in Figure 1; and

Figure 3 is an exploded perspective view of a conventional multihead-type magnetic head device.

### DESCRIPTION OF THE PREFERRED EMBODIMENT

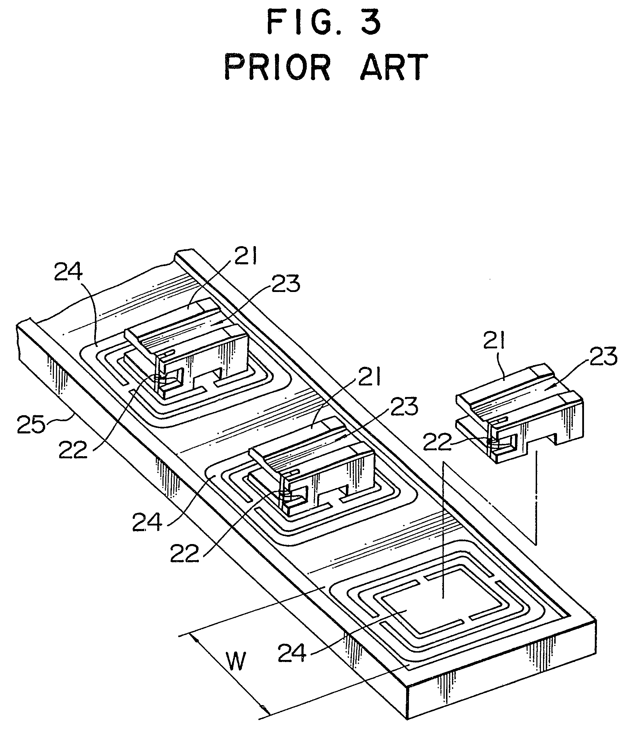

In the conventional multihead-type magnetic head device shown in Figure 3, magnetic head assemblies 23, each composed of one slider 21 and one magnetic head 22 attached thereto, are mounted on a support member 25 at equal pitch in the longitudinal direction thereof, through respective gimbal springs 24.

This magnetic head device is arranged in the direction of the magnetic disk, with the magnetic gaps of the magnetic heads 22 facing the magnetic disk. The magnetic heads 22 are moved over the magnetic disk in the radial direction of the disk by driving an actuator (not shown) connected to said support member 25. In this magnetic head device, it is impossible to arrange the magnetic head assemblies 23 on the support member 25 at a pitch corresponding to the width W of the gimbal spring 24 or less. Accordingly, it is by no means easy to apply this multihead-type magnetic head to a magnetic disk whose diameter is as small as 5.25 inches. In particular, it is next to impossible to apply this multihead-type magnetic head device to a magnetic disk whose diameter is 2.5 inches or less.

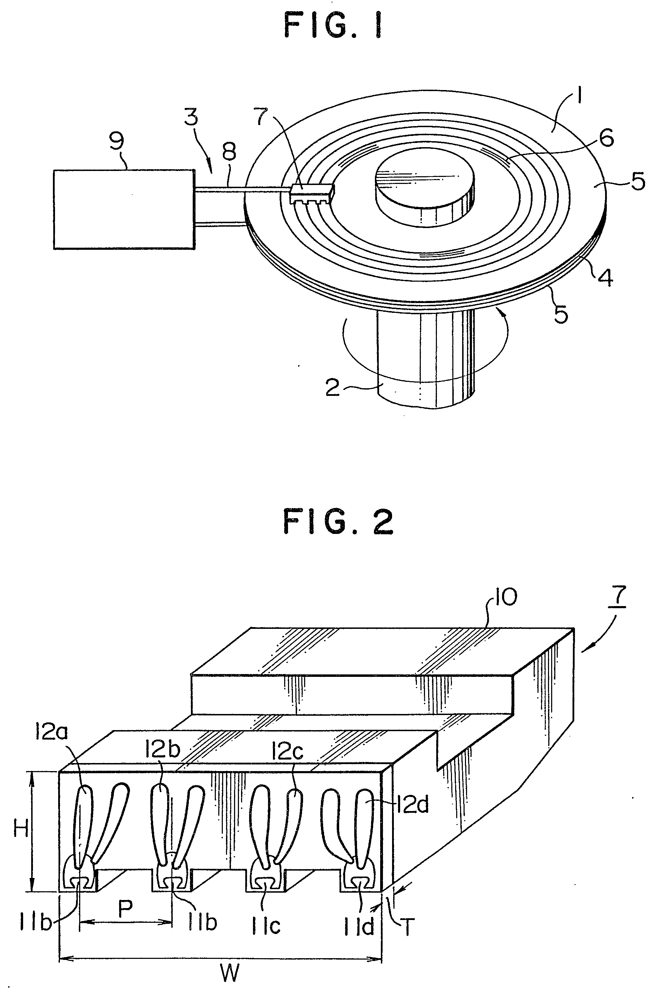

Figure 1 schematically shows a magnetic disk memory in accordance with an embodiment of this invention. This magnetic disk memory includes a magnetic disk 1, a spindle 2 adapted to drive the magnetic disk 1, and a magnetic head device 3.

The magnetic disk 1 is composed of a glass plate 4 having an outer diameter of 2.5 inches, an inner diamger of 1 inch, and a thickness of 0.2 mm. Both surfaces of this glass plate 4 are polished smooth and coated with magnetic films 5. The magnetic film 5 is composed of a chromium layer with a thickness of 0.2 $\mu$m, a cobalt-nickel alloy layer with a thickness of 0.05 $\mu$m, and a carbon layer with a thickness of 0.02 $\mu$m, sputtered and arranged in this order from the surface of the glass plate 4. In this mangetic disk 1, the area corresponding to the radius of about 21.8 mm to about 28.3 mm serves as the recording area. A track 6 for a tracking servo is provided in the area radially extending about 1.6 mm from the innermost border of the recording area (i.e., the area corresponding to a radius of about 21.8 mm to about 23.4 mm) with a track density of 1000 tpi. The other portion of the recording area than the innermost servo tracking area serves as a data area where data is recorded.

The spindle 2 which is connected to a motor (not shown) drives the disk 1 at 7200 r.p.m.

The magnetic head device 3 is composed of a magnetic head assembly 7, a spring member 8 elastically supporting this magnetic head assembly 7, and an actuator 9 adapted to transfer the magnetic head assembly 7 radially over said magnetic disk 1.

As Figure 2 shows in detail, the magnetic head assembly 7 includes a floating slider 10 on whose medium side surface four thin-film magnetic heads 11a, 11b, 11c and 11d having a width (W) of 3 mm, a height (H) of 1 to 2 mm, and a thickness (T) of 0.15 mm are embedded at equal pitch of P (1.6 mm). By a floating slider is meant the type of slider which is separated from the surface of the magnetic disk and flaots over it by introducing an air flow between its medium surface and the magnetic disk when the latter is rotated. The slider 10 may also be of the contact type. Reference numerals 12a, 12b, 12c and 12d in Figure 2 denote leads connecting the magnetic heads 11a, 11b, 11c and 11d to an external apparatus. In this magnetic head assembly 7, the magnetic head 11a which farthest from the actuator 9 is so adjusted that it comes to the position over the track 6 for the tracking servo, the magnetic heads 11a, 11b, 11c and 11d being arranged in a row in the radial direction of the magnetic disk. As described above, the servo tracking area is arranged on the innermost side of the recording area with the recording area therearound, so that there is obtained a favorable signal to noise ratio for data. For the actuator 9 which serves to drive the magnetic head assembly 7, a stepping motor, a voice coil, etc. may be employed.

Since in the above-described magnetic disk four magnetic heads 11a, 11b, 11c and 11d are arranged in a row in the radial direction the magnetic disk 1, the recording area to be shared by one magnetic head is 1/4 of the entire recording area. Accordingly, the transfer distance to be covered by the magnetic disk assembly 7 when it is driven by the actuator 9 can be reduced to 1/4 of the recording area, resulting in an access time so much reduced. Since the magnetic heads are rigidly embedded in one slider 10, the pitch P between two adjacent magnetic heads can be as small as 1.6 mm. Accordingly, the magnetic head device can be applied to a magnetic disk whose diameter is as small as 2.5 inches.

Further, since 1/4 of the recoridng area of the magnetic disk can be used as the servo track area, a sufficient effective area can be secured advantageously.

A magnetic disk memory in accordance with the above-described embodiment was tested under the following conditions: the rotational speed of the magnetic disk was 7200 rpm and the linear information recording density 30 kbpi. The actuator 9 used was of the voice coil type. The test gave an average track positioning time of 8 mS, an average rotation waiting time of ca. 4 mS, which means an average access time of 12 mS. Thus an ultrahigh-speed access was realized.

While in the above-described embodiment only one magnetic disk is provided, the gist of this invention is not to be so restricted. A multitude of magnetic disks may be stacked on the spindle, magnetic heads being arranged on both surfaces of each magnetic disk. In that case, a track for the tracking servo is formed on one surface of one of the magnetic disks.

The present invention essentially relates to the magnetic head mounting structure in a magnetic disk memory. The size, structure and material of the magnetic disk used and the structure, number, spacing, etc. of the magnetic heads embedded in one slider are not to be restricted to those in the above-described embodiment. They may be arbitrarily selected as needed.

As described above, in the magnetic disk memory of this invention a plurality of magnetic heads are rigidly embedded in one slider, so that the distance between two adjacent magnetic heads can be very small. This enables a multihead-type magnetic head device to be applied to a small-diameter magnetic disk. Accordingly, the access time in recording/reproduction can be substantially reduced by the synergistic effect of the increased rotational speed of the magnetic disk and the shortened transfer distance of the magnetic heads.

## Claims

1. In a magnetic disk memory having a magnetic disk and a magnetic head device adapted to record and/or reproduce information using said magnetic disk as the medium, said magnetic head device is composed of a plurality of magnetic heads rigidly mounted on one slider, said plurality of magnetic heads being arranged in the radial direction of said magnetic disk.

2. A magnetic disk memory as claimed in claim 1, wherein three or more magnetic heads are mounted on said slider at equal pitch.

3. A magnetic disk memory as claimed in claim 1, wherein thin-film magnetic heads are used as said magnetic heads.

4. A magnetic disk memory as claimed in claim 1, wherein that magnetic head which is situated farthest from the actuator is so adjusted that it comes to the position over the track for the tracking servo.

5. A magnetic disk memory as claimed in claim 1, wherein a magnetic head assembly on which a plurality of magnetic heads are mounted is driven by means of a voice coil system.

# FIG. I

# FIG. 2

# FIG. 3
# PRIOR ART